# EUROPEAN PATENT SPECIFICATION

(11) **EP 1 269 030 B1**
(45) Date of publication and mention of the grant of the patent: **25.02.2004**
(21) Application number: 01917246.9
(22) Date of filing: 30.03.2001
(51) Int. Cl.: F16B 23/00, F16B 41/00, B25B 15/00, B25B 13/48

(54) **DRIVING HEADS FOR FASTENERS**
ANTRIEBSKÖPFE FÜR BEFESTIGUNGSELEMENTE
TETES CONDUCTRICES POUR FIXATIONS

(30) Priority: 07.04.2000 GB 0008569
(43) Date of publication of application: 02.01.2003
(73) Proprietor: Uni-Screw Limited, Clifford, Herefordshire HR3 5EZ (GB)
(72) Inventor: Brooks, Laurence Antony, Lodge Moor Sheffield S10 4ER (GB)
(74) Representative: Lunt, Mark George Francis
(86) International application number: PCT/GB2001/001404
(87) International publication number: WO 2001/077538

(56) References cited:
- EP-A- 0 926 362
- GB-A- 2 037 390
- GB-A- 2 329 947
- US-A- 3 463 209
- US-A- 4 258 596

## Description

This invention relates to the field of driving heads for fasteners, for example screws, and a driver (for example a screwdriver) therefor.

The invention relates more particularly to the "torque receiving element" (hereinafter referred to as a "driving head") of fastenings which require rotation in order to install them. Generally such fasteners, for example bolts, screws etc. are threaded. However, it is envisaged that the present invention is also applicable to non-threaded fasteners whose function is dependent upon rotation about their longitudinal axis.

There are a number of well-known disadvantages with conventional driving heads. For example, driving heads having a recess in which a mating driver is engaged suffer from the problem known as "cam-out". This is the tendency of the driver and mating recess to move axially apart under an applied torque as a result of the torque transmitting forces which are inclined at a small angle to the longitudinal axis of the fastener. The problem is created by the faces of the recess in the driving head being inclined. This inclination or "draw" is necessary during the manufacturing process in order to facilitate the extraction of the punch used to form the recess. Failure to provide sufficient "draw" or angle of release for the punch, results in damage to the punch and/or to the recess being formed.

Cam-out requires the operator to apply a counter balancing force to the screwdriver, which results in operator fatigue. Where there is an imbalance between the two forces, the screwdriver moves axially out of the recess in the driving head, causing wear to the engaging faces of the driver and recess as well as potential damage to the adjoining surfaces.

Another disadvantage of "draw" is that mere insertion of a driver into a recessed driving head is not sufficient to allow the fastener to be carried by frictional contact between the driver and recessed driving head. The need to insert a fastener into difficult locations would be greatly facilitated if the driver could carry the fastener to the location where it is required.

A further problem with existing driving heads is that a whole range of mating drivers is required to install the full range of fasteners which are available. If the operator is tempted to use a "makeshift" driver, the driving head of the fastener can be damaged.

The above-described problems are alleviated by use of a multi-tiered screw and screwdriver therefor, as described in GB1150382 (Podolsky). The multi-tiered screw described therein has a recess or "socket" formed in the head of the screw which has a number of interior faces all parallel to the longitudinal axis of the screw. Using a correspondingly shaped screwdriver, it is possible to achieve an interference fit between the screw and screwdriver, thus allowing the operator to insert the screw into an awkward position using the screwdriver itself.

A further advantage of the Podolsky screw and screwdriver is that a single screwdriver can be used with a range of different screw sizes. This is possible because, as the diameter of the driving head increases, more tiers of the same screwdriver can be contained within the tiered recess in the driving head. Therefore, when working with a large range of differently-sized screws, the number of screwdrivers which need to be kept to hand is reduced.

However it is apparent that if many screws can be turned with a single screwdriver then security is reduced, which may be a problem if it means equipment of a hazardous or sensitive nature is readily accessible.

There is thus a need for a multi-tiered fastener and driver which have the advantages of the Podolsky screw and screwdriver but with improved security features. It is an object of the present invention to provide such a fastener and driver.

According to a first aspect of the present invention there is provided a fastener having a driving head which includes at least two superimposed non-circular recesses for receiving the bit of a driver with which driver a torque can be applied to operate the fastener, at least one of said recesses having a different diameter to the other(s), wherein the diameter of a recess is its longest dimension parallel to the top surface of the fastener, characterised in that the fastener comprises a security feature whereby said torque needs to be applied to at least two of said recesses in order to operate the fastener.

Preferably, the security feature further comprises said at least one recess having a different shape to the other(s).

Preferably, said at least one recess is differently shaped in lateral cross-section. Alternatively, said at least one recess has the same shaped lateral cross-section, but is rotationally displaced.

In a preferred form, the longitudinal axes of at least two recesses are not co-linear.

In a further preferred form, at least one of said recesses approximates a circle in lateral cross-section. Ideally, said recess approximating a circle in lateral cross-section is an ellipse.

Preferably, the height of at least one of said recesses is in the range 0.5mm to 2mm inclusive. Ideally, said height is 1mm.

Preferably, the ratio of height to diameter of at least one of said recesses is in the range 0.8 to 1.2 inclusive.

Preferably, the diameter of at least one of said recesses is not a standard metric or imperial size.

According to a second aspect of the invention there is provided a driver for use with a fastener as described in any of the preceding paragraphs, having a bit of complementary shape to at least two of the recesses of the fastener. Preferably, the longitudinal axis of the driver is, in use, co-linear with the longitudinal axis of the fastener.

According to a third aspect of the invention there is provided a forming tool for forming a fastener, as described in any of the preceding paragraphs, having a punch of complementary shape to the desired recesses of the fastener.

Preferably, said punch has a pointed end, the point having an angle in the range of 6°-30° inclusive. Ideally, said angle is 25°.

Preferably, in use, the pointed end is within 0.3mm of the longitudinal axis of the fastener being formed.

According to a fourth aspect of the invention, there is provided a push-fit cap for use with a fastener as described in any of the preceding paragraphs, having a complementary shape to at least two of the recesses of the fastener.

Preferred embodiments of the invention will now be more particularly described, by way of example, with reference to the accompanying drawings in which:
Figure 1 is an axial section of a prior art multi-tiered fastener, having three different "tiered" sizes of female recess;
Figure 2 is a side view of a prior art driver for use with the fastener shown in Figure 1;
Figure 3 is a top view of the recesses in the driving head of the fastener shown in Figure 1;
Figure 4 is a top view of the recesses in a driving head embodying the first aspect of the invention;
Figure 5 is a top view of an alternative embodiment of the recesses in a driving head according to the first aspect of the invention;
Figures 6-8 are top views of further embodiments of the recesses in a driving head according to the first aspect of the invention, wherein at least one recess is rotationally displaced;
Figures 9-11 are top views of further embodiments of the recesses in a driving head according to the first aspect of the invention, wherein at least one recess is axially offset;
Figures 12 and 13 are top views of further embodiments of the recesses in a driving head according to the first aspect of the invention, wherein at least one recess is an ellipse;
Figure 14 is a top view of the recesses in a driving head embodying the second aspect of the invention;
Figures 15 and 16 are top views of further embodiments of the recesses in a driving head, wherein the recesses are elliptical;
Figures 17A and 17B are axial sections of a fastener according to the first aspect of the invention, having recesses as shown in Figure 10; and
Figures 18A and 18B are side views of a driver embodying the third aspect of the invention, suitable for use with the fastener of Figures 17A and 17B.

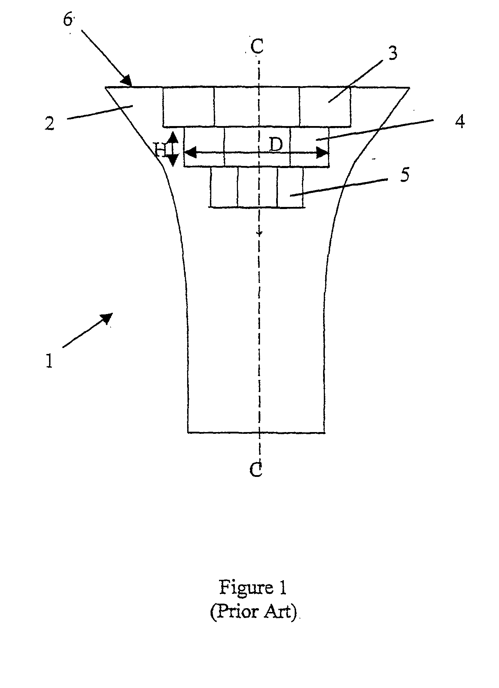

Figure 1 shows a prior art screw 1 having a driving head 2 which includes three hexagonal female torque-receiving recesses 3, 4, 5 of decreasing diameter (as one moves away from the top surface 6 of the screw 1). Screws of smaller dimensions may have only two recesses (3,4) or indeed a just a single recess (3). Similarly, larger screws having more than three recesses may be provided.

Throughout this description, the "height" of a recess is the dimension parallel to the longitudinal axis of the screw, indicated as H in Figure 1. The recess "diameter" is the longest dimension parallel to the top surface 6 of the screw, indicated as D in Figure 1.

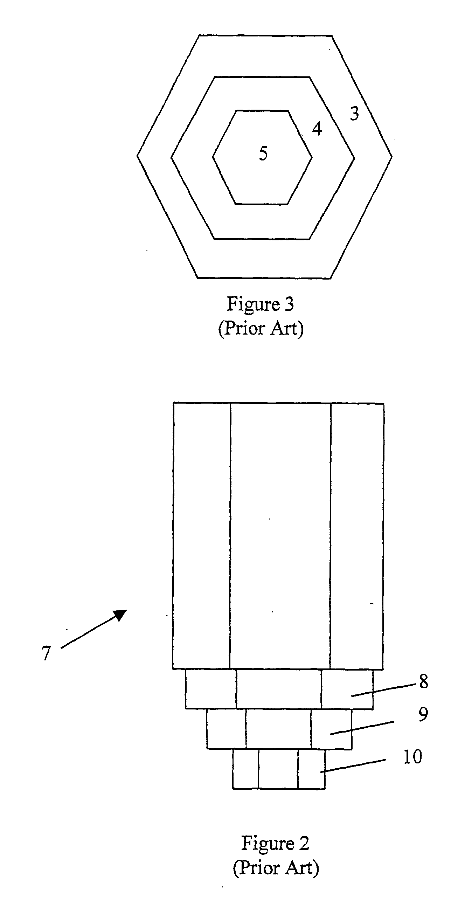

Figure 2 shows a side view of a prior art driver 7 suitable for use with any of the differently-sized screws in a particular series. The driver bit has a complementary shape to the recesses in the driving heads of the screws. In the illustrated example, the driver 7 has three tiers 8, 9 and 10. When the driver 7 is engaged with the screw 1 illustrated in Figure 1, all three tiers 8, 9 and 10 engage in the three recesses 3, 4 and 5 respectively.

If the driver 7 was being used with a screw having only two recesses, only tiers 9 and 10 would be in driving engagement with the screw. Similarly, if the driver 7 was being used with a screw having only one recess, only tier 10 would be in driving engagement with the screw. The torque applied by a single tier, tier 10 in this instance, would be sufficient to operate the screw.

In this way, a single driver 7 can be used with numerous differently-sized screws, so long as the recesses are of the same shape; hexagons, in the illustrated example.

In order to improve security and minimise unauthorised tampering, it is proposed to provide a driving head which requires a dedicated driver to operate it owing to the security features of the driving head. The first security feature is that the height H of each recess is not great enough to allow sufficient torque to be applied to the screw via only one tier of a corresponding screwdriver bit. Therefore the screwdriver needs to match at least two of the recesses on the driving head of the screw.

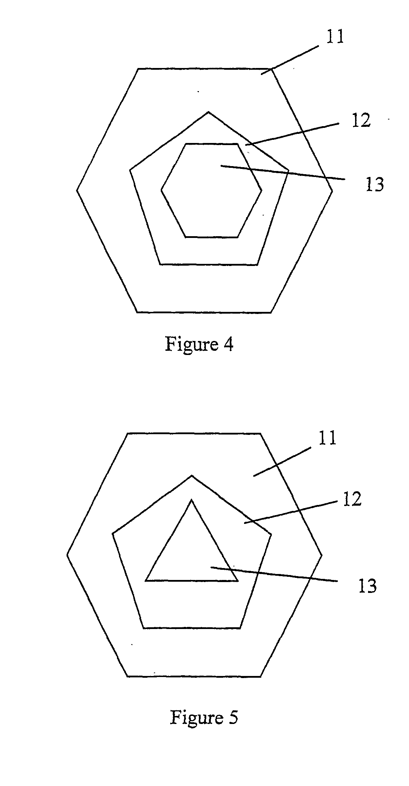

Further security features can be provided in a number of ways. For example, with reference to Figure 4, a driving head can be provided in which the shape of at least one recess (in lateral cross-section) differs from the other two. In the illustrated example, the largest and smallest recesses (11 and 13 respectively) are hexagonal in shape. The intermediate recess 12 is a pentagon.

As shown in Figure 5, it is possible for all three recesses 11, 12 and 13 to differ in shape. In Figure 5, the largest recess 11 is a hexagon, the intermediate recess 12 is a pentagon and the smallest recess 13 is a triangle.

It will be appreciated that a very large number of combinations of differently-shaped recesses is possible. For example, the lateral cross-sectional shape of each recess could be a regular polygon, an ellipse, an "eye" shape, a lobed figure or any combination thereof.

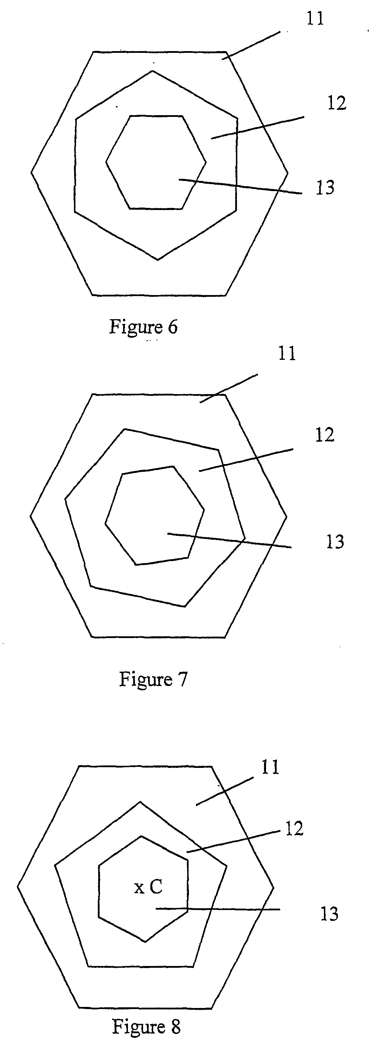

In addition or as an alternative to the above-described security features, it is also possible to provide a recesses in the driving head as illustrated in Figures 6-8. In these examples, at least two of the recesses have the same basic cross-sectional shape but are rotational displaced from one another.

For example, in Figure 6, all three recesses 11-13 are hexagonal. However, the intermediate recess 12 is rotationally displaced or misaligned with the other two recesses. Therefore a standard three-tiered hexagonal driver, such as the type described in Podolsky (GB1150382) could not be used to operate a fastener having recesses in the driving head as illustrated in Figure 6.

It is possible, as shown in Figure 7, for all three recesses 11-13 to be rotationally displaced from one another.

Furthermore, as shown in Figure 8, the rotational displacement security feature can be combined with the differently-shaped recess feature. In Figure 8, the two hexagonal recesses 11 and 13 are rotationally displaced from one another. The intermediate recess 12 has a pentagonal cross-sectional shape.

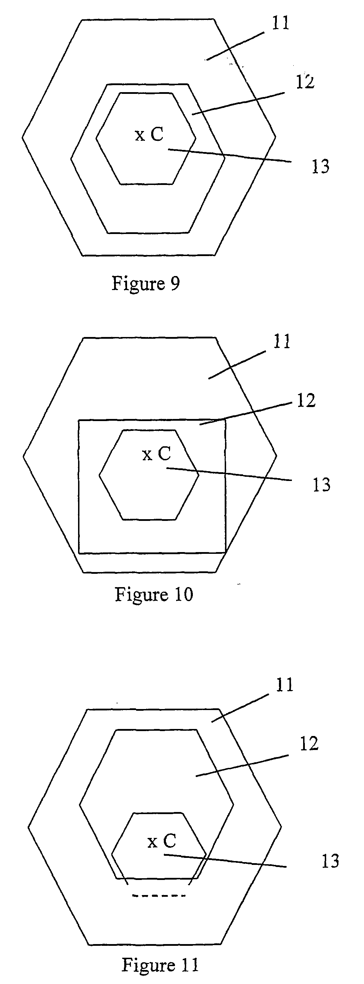

Turning now to Figures 9-11, a further security feature is introduced. In the previously-described embodiments, all of the recesses 11-13, regardless of their shape and rotational alignment, have been centred about point C (shown in Figure 8) which corresponds with the longitudinal axis of the fastener (see Figure 1 for side view). Throughout this description, the "longitudinal axis" of a recess is the axis parallel to the side walls of the recess and, in the previously-described embodiments, co-linear with the longitudinal axis C of the fastener.

In the embodiments illustrated in Figures 9-11, the longitudinal axis of at least one of the recesses is axially displaced from the longitudinal axis C of the fastener i.e. is not co-linear with axis C.

In Figure 9, for example, the intermediate recess 12 is axially displaced from the axis C.

This feature can be combined with others of the previously-described features. For example, as shown in Figure 10, it is possible to combine differently-shaped recesses (two hexagons and one square) with at least one of the recesses being axially displaced from axis C.

It is preferable for the smallest recess 13 to be coaxial with the axis C, as shown in Figures 9 and 10. However, it may be possible to offset even the smallest recess 13, as shown in Figure 11. In all cases, but particularly in the Figure 11 embodiment, it is important for the longitudinal axis of the screwdriver to be colinear with axis C when the screwdriver is in use.

The part of recess 13 shown dotted in Figure 11 would not be necessary (or visible), given the location of the offset intermediate recess 12.

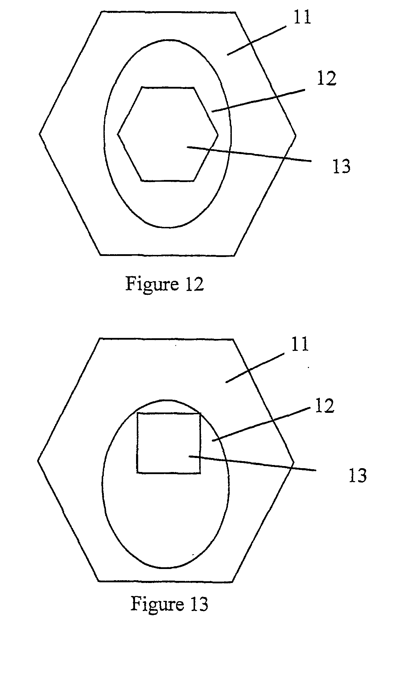

As mentioned above, one or more of the recesses can be elliptical in lateral cross-section, as illustrated in Figures 12 and 13 in which the intermediate recess 12 is elliptical.

There is a significant advantage not envisaged in the prior art in using recesses in a multi-tiered fastener which approximate a circle. If the geometry of the ellipses (or other near-circular shape) is carefully selected, it is possible to provide a fastener with recesses which, although allowing sufficient torque to be applied in order to operate the fastener, appear to the naked eye to be approximately circular in shape. This circular appearance should deter tampering as it appears that the fastener cannot be undone with a screwdriver.

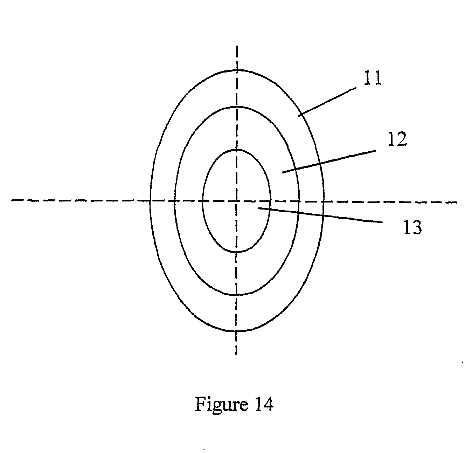

Figure 14 shows an arrangement of three concentric elliptical recesses 11-13. The elliptical nature of the recesses is somewhat exaggerated for illustrative purposes, however in practice the intention is to have as low a ratio as possible between the long and short axis of each ellipse (or other near-circular shape) in order that, on the one hand, torque can be effectively applied to operate the fastener but, on the other hand, the recesses visually approximate circles as a deterrent against tampering.

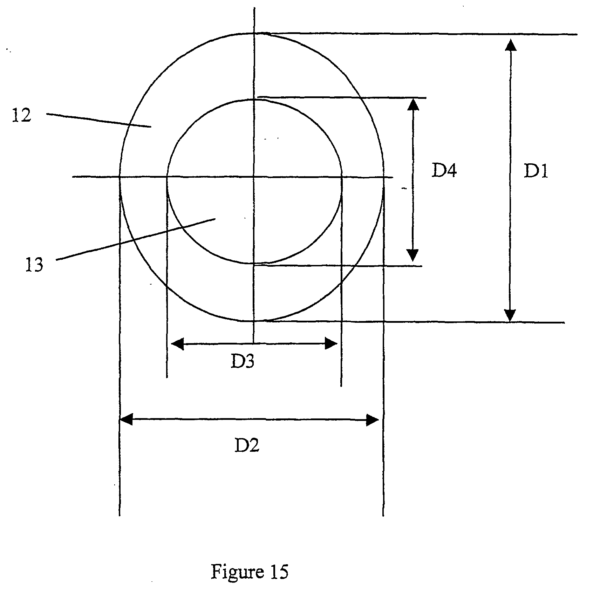

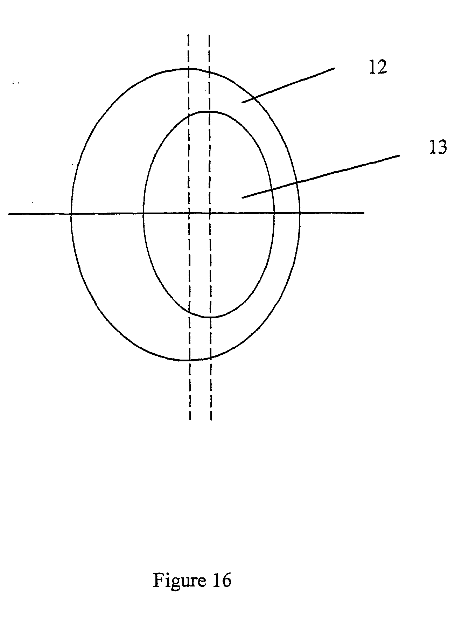

It will be apparent, however, that even if the recesses approximate a circle visually, they must in fact be non-circular in order for torque to be able to be applied to the fastener.
The other above-described security features can also be incorporated; for example the ellipses can be rotationally offset as shown in Figure 15, or axially displaced as shown in Figure 16. Figures 15 and 16 show an embodiment having two recesses 12, 13 rather than three.

In Figure 15, the two elliptical recesses 12, 13 are rotationally displaced so that the long axis D1 of recess 12 is perpendicular to the long axis D3 of recess 13. The long axis (D1, D3) of each ellipse may be 5-10% longer than the respective short axis (D2, D4).

As can be seen from the dotted axes in Figure 16, the two elliptical recesses 12, 13 can be axially displaced.

A further security feature (not illustrated) is the provision of a push-fit cap which can be applied to the fastener once it is in place. The cap has a complementary shape to at least two of the recesses of the fastener. Preferably the top surface of the cap is flush with the top surface 6 of the fastener to further minimise tampering.

The fastener could be manufactured using a cold forming process. A forming tool is required which includes a punch of complementary shape to the desired recesses of the fastener. The punch has a pointed end, the point having an angle in the range of 6°-30° inclusive and preferably 25°.

It is important that the pointed end is closely aligned with the longitudinal axis of the fastener which is being punched or formed, else the punch or the fastener may fail. Preferably, the pointed end of the punch is, in use, within 0.3mm of the longitudinal axis of the fastener being formed.

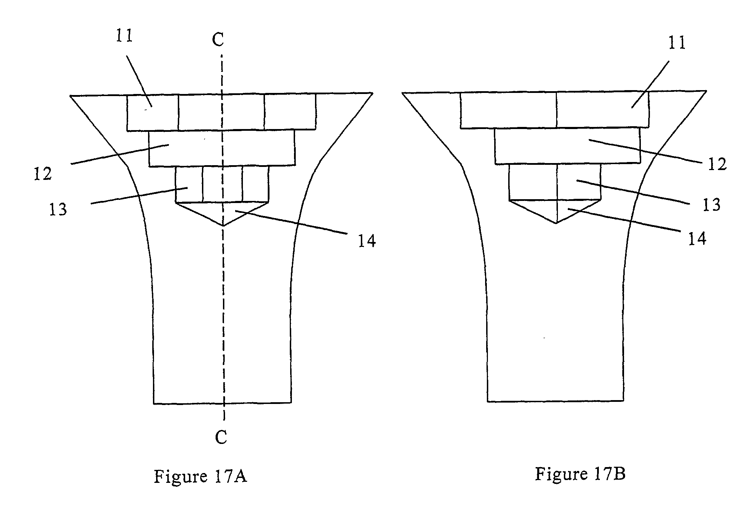

Figure 17A is an axial section of a fastener having recesses 11 - 13 as shown in Figure 10. The largest and smallest recesses (11 and 13 respectively) are axially and rotationally aligned hexagons whereas the intermediate recess 12 is a square which is axially displaced as shown in Figure 10.

Figure 17B is an axial section of the fastener of Figure 17A, rotated through 90°.

An additional feature, shown in Figures 17A and 17B is an alignment recess 14, below the smallest recess 13, which aids alignment of a driver bit when the fastener is in use. The point of the alignment recess 14 passes through the longitudinal axis C of the fastener.

Alignment of the driver may also be facilitated by the provision of a tab or other marking on the driving head showing which way the driver should be inserted into the fastener. However, this feature may not be desirable in embodiments of the invention to be used in high security applications.

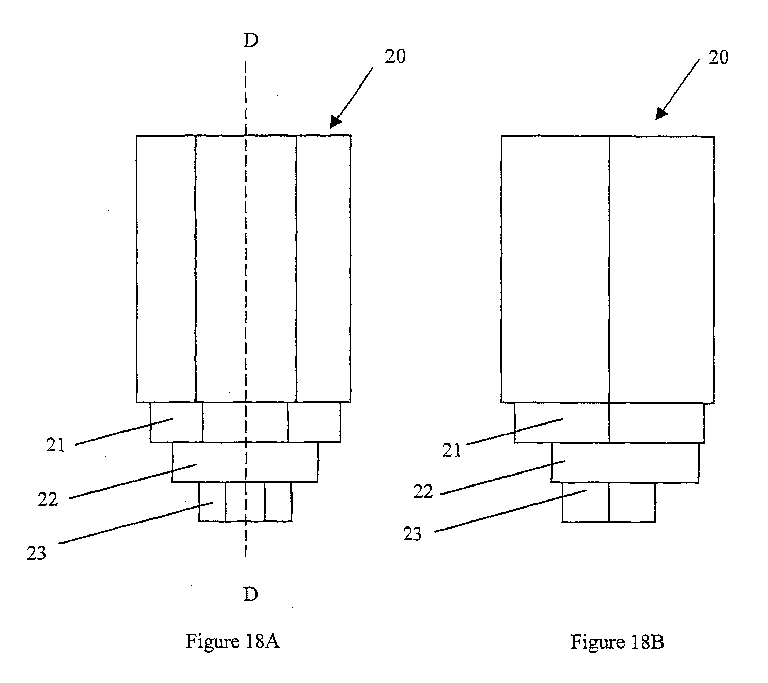

Figure 18A is a side view of a driver 20 suitable for use with the fastener of Figures 17A and 17B. The driver 20 has a longitudinal axis D which, when the driver is used to tighten or loosen a fastener, is colinear with the longitudinal axis C of the fastener.

The bit of the driver 20 is provided with three tiers 21-23 which are complementary in shape to the recesses 11-13 illustrated in Figure 10.

Figure 18B is a side view of the driver 20 shown in Figure 18A, rotated through 90°.

The fastener of the present invention thus provides security features which reduce the likelihood of tampering as a dedicated driver is required to operate the fastener.

## Claims

1. Fastener (1) having a driving head (2) which includes at least two superimposed non-circular recesses (3, 4, 5) for receiving the bit of a driver (7) with which driver a torque can be applied to operate the fastener, at least one of said recesses having a different diameter to the other(s), wherein the diameter of a recess is its longest dimension parallel to the top surface of the fastener, **characterised in that** the fastener (1) comprises a security feature whereby said torque needs to be applied to at least two of said recesses (3, 4, 5) in order to operate the fastener (1).

2. Fastener as claimed in claim 1 wherein the security feature further comprises said at least one recess having a different shape to the other(s).

3. Fastener as claimed in claim 2 wherein said at least one recess is differently shaped in lateral cross-section.

4. Fastener as claimed in claim 1 or claim 2 wherein said at least one recess has the same shaped lateral cross-section, but is rotationally displaced.

5. Fastener as claimed in any of claims 1-4 wherein the longitudinal axes of at least two recesses are not co-linear.

6. Fastener as claimed in any of the preceding claims wherein at least one of said recesses approximates a circle in lateral cross-section.

7. Fastener as claimed in claim 6 wherein said recess approximating a circle in lateral cross-section is an ellipse.

8. Fastener as claimed in any of the preceding claims wherein the height of at least one of said recesses is in the range 0.5mm to 2mm inclusive.

9. Fastener as claimed in claim 8 wherein said height is 1mm.

10. Fastener as claimed in any of the preceding claims wherein the ratio of height to diameter of at least one of said recesses is in the range 0.8 to 1.2 inclusive.

11. Fastener as claimed in any of the preceding claims wherein the diameter of at least one of said recesses is not a standard metric or imperial size.

12. Driver (7) for use with a fastener (1) as described in any of the preceding claims having a bit (8, 9, 10) of complementary shape to at least two of the recesses of the fastener.

13. Driver as claimed in claim 12 wherein the longitudinal axis of the driver is, in use, co-linear with the longitudinal axis of the fastener.

14. Forming tool for forming a fastener as claimed in any of claims 1-11 having a punch of complementary shape to the desired recesses of the fastener.

15. Forming tool as claimed in claim 14 wherein the punch has a pointed end, the point having an angle in the range of 6°-30° inclusive.

16. Forming tool as claimed in claim 15 wherein said angle is 25°.

17. Forming tool as claimed claim 15 or claim 16 wherein said pointed end is within 0.3mm of the longitudinal axis of the fastener being formed.

18. Push-fit cap for use with a fastener as claimed in any of claims 1-11 having a complementary shape to at least two of the recesses of the fastener.

## Patentansprüche

1. Befestiger (1) mit einem Antriebskopf (2), der mindestens zwei übereinandergelegte, nicht kreisförmige Vertiefungen (3, 4, 5) zum Aufnehmen der Schrauberspitze eines Schraubers (7) aufweist, mi,t dem ein Drehmoment zur Betreibung des Befestigers übertragen werden kann, wobei mindestens eine der Vertiefungen einen anderen Durchmesser als die andere(n) hat, wobei der Durchmesser einer Vertiefung dessen größte Erstreckung parallel zur Oberseite des Befestigers ist, **dadurch gekennzeichnet, dass** der Befestiger (1) ein Sicherheitsmerkmal aufweist, wodurch das Drehmoment an zumindest zwei der Vertiefungen (3, 4, 5) angelegt werden muss, um den Befestiger (1) zu betreiben.

2. Befestiger nach Anspruch 1, wobei das Sicherheitsmerkmal ferner umfasst, dass mindestens eine Vertiefung eine andere Form als die andere(n) hat.

3. Befestiger nach Anspruch 2, wobei mindestens eine Vertiefung im Querschnitt anders geformt ist.

4. Befestiger nach Anspruch 1 oder Anspruch 2, wobei die mindestens eine Vertiefung die gleiche seitliche Querschnittsform hat, jedoch in Drehrichtung versetzt ist.

5. Befestiger nach einem der Ansprüche 1 bis 4, wobei die Längsachsen von zumindest zwei Vertiefungen nicht kolinear sind.

6. Befestiger nach einem der vorhergehenden Ansprüche, wobei mindestens eine der Vertiefungen im seitlichen Querschnitt einem Kreis angenähert ist.

7. Befestiger nach Anspruch 6, wobei die im seitlichen Querschnitt einem Kreis angenäherte Vertiefung eine Ellipse ist.

8. Befestiger nach einem der vorhergehenden Ansprüche, wobei die Höhe von mindestens einer der Vertiefungen im Bereich von 0,5 mm bis einschließlich 2 mm liegt.

9. Befestiger nach Anspruch 8, wobei die Höhe 1 mm ist.

10. Befestiger nach einem der vorhergehenden Ansprüche, wobei das Verhältnis von Höhe zu Durchmesser von mindestens einer der Vertiefungen im Bereich von 0,8 bis 1,2 einschließlich liegt.

11. Befestiger nach einem der vorhergehenden Ansprüche, wobei der Durchmesser von mindestens einer der Vertiefungen keine übliche metrische oder Zoll-Größe hat.

12. Treiber (7) zur Verwendung mit einem Befestiger (1) nach einem der vorhergehenden Ansprüche, mit einer Schrauberspitze (8, 9, 10) von komplementärer Form zu mindestens zwei der Vertiefungen des Befestigers.

13. Treiber nach Anspruch 12, wobei die Längsachse des Treibers im Betrieb kolinear mit der Längsachse des Befestigers ist.

14. Formwerkzeug zum Formen eines Befestigers nach einem der Ansprüche 1 bis 11, mit einer Stanze von komplementärer Form zu den gewünschten Vertiefungen des Befestigers.

15. Formwerkzeug nach Anspruch 14, wobei die Stanze ein spitzes Ende aufweist, wobei die Spitze einen Winkel im Bereich von 6° bis einschließlich 30° aufweist.

16. Formwerkzeug nach Anspruch 15, wobei der Winkel 25° ist.

17. Formwerkzeug nach Anspruch 15 oder Anspruch 16, wobei das spitze Ende innerhalb von 0,3 mm der Längsachse des zu formenden Befestigers liegt.

18. Einpresskappe zur Verwendung mit einem Befestiger nach einem der Ansprüche 1 bis 11, die eine komplementäre Form zu mindestens zwei der Vertiefungen des Befestigers hat.

## Revendications

1. Elément de fixation (1) ayant une tête d'entraînement (2) qui comprend au moins deux cavités non-circulaires superposées (3, 4, 5) pour recevoir l'embout d'un organe d'entraînement (7), organe d'entraînement avec lequel un couple peut être appliqué pour actionner l'élément de fixation, au moins l'une desdites cavités ayant un diamètre différent de l'autre ou des autres cavités, le diamètre d'une cavité étant sa dimension la plus longue parallèlement à la surface supérieure de l'élément de fixation, **caractérisé par le fait que** l'élément de fixation (1) comprend une caractéristique de sécurité suivant laquelle ledit couple a besoin d'être appliqué à au moins deux desdites cavités (3, 4, 5) pour actionner l'élément de fixation (1).

2. Elément de fixation selon la revendication 1, dans lequel la caractéristique de sécurité comprend en outre ladite au moins une cavité ayant une forme différente de l'autre ou des autres cavités.

3. Elément de fixation selon la revendication 2, dans lequel ladite au moins une cavité présente une forme différente en coupe latérale.

4. Elément de fixation selon la revendication 1 ou la revendication 2, dans lequel ladite au moins une cavité a la même forme en coupe latérale, mais est décalée en rotation.

5. Elément de fixation selon l'une quelconque des revendications 1 à 4, dans lequel les axes longitudinaux d'au moins deux cavités ne sont pas colinéaires.

6. Elément de fixation selon l'une quelconque des revendications précédentes, dans lequel au moins l'une desdites cavités se rapproche d'un cercle en coupe latérale.

7. Elément de fixation selon la revendication 6, dans lequel ladite cavité se rapprochant d'un cercle en coupe latérale est une ellipse.

8. Elément de fixation selon l'une quelconque des revendications précédentes, dans lequel la hauteur d'au moins l'une desdites cavités se situe dans la plage de 0,5 mm à 2 mm inclus.

9. Elément de fixation selon la revendication 8, dans lequel ladite hauteur est de 1 mm.

10. Elément de fixation selon l'une quelconque des revendications précédentes, dans lequel le rapport de la hauteur au diamètre d'au moins l'une desdites cavités se situe dans la plage de 0,8 à 1,2 inclus.

11. Elément de fixation selon l'une quelconque des revendications précédentes, dans lequel le diamètre d'au moins l'une desdites cavités n'est pas d'une dimension métrique ou anglaise standard.

12. Organe d'entraînement (7) destiné à être utilisé avec un élément de fixation (1) tel que décrit à l'une quelconque des revendications précédentes, ayant un embout (8, 9, 10) de forme complémentaire d'au moins deux des cavités de l'élément de fixation.

13. Organe d'entraînement selon la revendication 12, dans lequel l'axe longitudinal de l'organe d'entraînement est, lors de l'utilisation, co-linéaire avec l'axe longitudinal de l'élément de fixation.

14. Outil de formage pour former un élément de fixation tel que défini à l'une quelconque des revendications 1 à 11, ayant un poinçon de forme complémentaire des cavités désirées de l'élément de fixation.

15. Outil de formage selon la revendication 14, dans lequel le poinçon a une extrémité pointue, la pointe ayant un angle dans la plage de 6°-30° inclus.

16. Outil de formage selon la revendication 15, dans lequel ledit angle est de 25°.

17. Outil de formage selon la revendication 15 ou la revendication 16, dans lequel ladite extrémité pointue se situe dans les 0,3 mm de l'axe longitudinal de l'élément de fixation qui est formé.

18. Capuchon de montage à frottement doux, destiné à être utilisé avec un élément de fixation tel que défini à l'une quelconque des revendications 1 à 11, ayant une forme complémentaire d'au moins deux des cavités de l'élément de fixation.
